Europäisches Patentamt

(19) European Patent Office

Office européen des brevets

(11) Numéro de publication: **0 169 757**
**B1**

(12) **FASCICULE DE BREVET EUROPEEN**

(45) Date de publication du fascicule du brevet: 05.09.90

(51) Int. Cl.⁵: **H 04 L 12/58**

(21) Numéro de dépôt: 85401243.2

(22) Date de dépôt: 21.06.85

(54) Procédé de détermination du dernier noeud intermédiaire dans un réseau de plusieurs noeuds interconnectés.

(30) Priorité: 04.07.84 FR 8410612

(43) Date de publication de la demande:
29.01.86 Bulletin 86/05

(45) Mention de la délivrance du brevet:
05.09.90 Bulletin 90/36

(84) Etats contractants désignés:
AT BE CH DE FR GB IT LI LU NL SE

(56) Documents cités:

USA-JAPAN COMPUTER CONFERENCE
PROCEEDINGS, 26-28 aou7t 1975, Tokyo,
session 21-4-1, pages 459-463, AFIPS, Montvale,
US; T. ITO et al.: "Packet switching subnet of
JIPNET system"

IEEE TRANSACTIONS ON COMPUTERS, vol.
C-24, no. 3, mars 1985, pages 255-266, IEEE,
New York, US; D.P. AGRAWAL et al.: "Dynamic
accessibility testing and path length
optimization of multistage interconnection
networks"

(73) Titulaire: JS TELECOMMUNICATIONS
31, 32, quai de Dion Bouton
F-92811 Puteaux Cédex (FR)

(72) Inventeur: Deveze, Pascal
60, Boulevard Richard Wallace
F-92800 Puteaux (FR)

(74) Mandataire: Levesque, Denys et al
Cabinet Beau de Loménie 55, rue d'Amsterdam
F-75008 Paris (FR)

(56) Documents cités:
IEEE INTERNATIONAL CONFERENCE ON
CIRCUITS AND COMPUTERS, ICCC 82, 28
septembre - 1 octobre 1982, New York, pages
93-97, IEEE, New York, US; K. BRAYER:
"Survivable computer communication routing
using decentralized control"

IEEE TRANSACTIONS ON COMPUTERS, vol.
C-28, no. 8, aou7t 1979, pages 567-572, IEEE,
New York, US; E.E. SWARTZLANDER, Jr. et al.:
"A routing algorithm for singal processing
networks"

# EP 0 169 757 B1

(56) Documents cités:
**IEEE TRANSACTIONS ON COMMUNICATIONS,
vol. COM-23, novembre 1975, pages 1371-1373,
New York, US; D.H. CHYUNG et al.: "A routing
algorithm for computer communication
networks"**

## Description

La présente invention concerne un procédé de détermination du dernier noeud intermédiaire d'un chemin comportant un minimum de noeuds dans un réseau comprenant plusieurs noeuds interconnectés au moyen d'une pluralité de tronçons. Elle concerne également un procédé d'établissement d'une table d'acheminement pour chaque noeud du réseau ainsi que d'une table générale d'acheminement permettant l'acheminement à travers ce réseau aussi bien d'informations entre des calculateurs interconnectés que de communications téléphoniques entre des autocommutateurs interconnectés. De façon plus générale elle concerne donc les réseaux de communication constitués par une pluralité de noeuds géographiquement séparés et reliés entre eux par des lignes.

Il est évident que pour acheminer une communication entre deux noeuds éloignés, il est souvent nécessaire de traverser différents autre noeuds. Le problème se pose donc de déterminer le chemin comprenant le moins possible de noeuds intermédiaires ou de tronçons et les adresses de ces noeuds. En outre, sachant que certains noeuds ou tronçons internodaux peuvent être saturés ou être hors service, il est nécessaire de pouvoir établir et modifier une table d'acheminement des communications.

On connaît des réseaux modulaires dont la configuration est facilement adaptable aux besoins, comme décrit par exemple dans le brevet français 2 366 754, ou bien déterminant des files d'attente en cas de saturation, comme décrit par exemple dans le brevet français 2 453 557, mais ces réseaux ne sont pas adaptables aux modifications ponctuelles de leurs caractéristiques.

Dans le brevet français 2 320 022, est décrit un procédé pour établir des adresses de lignes de parcours au moyen de télégrammes d'établissement de communication transmis par des postes de relayage. Selon ce procédé, à chaque opération d'établissement de communication, les télégrammes correspondants parcourent tout le réseau de communications, seule la longueur des télégrammes étant contrôlée.

De ce fait, l'abonné est atteint par au moins un télégramme. Un tel procédé tient compte de l'état de tous les points du réseau, mais il présente l'inconvénient pour sa mise en oeuvre de nécessiter l'émission de télégrammes sur tout le réseau, ce qui peut participer à la saturation de ce dernier, et de ne pas permettre de déterminer aisément le trajet le plus court à emprunter.

La présente invention a pour but d'obvier à ces inconvénients.

Elle a donc pour objet un procédé permettant de déterminer le dernier noeud intermédiaire d'un chemin comportant un minimum doe noeuds pour aller du m-ième noeud au n-ième noeud dans un réseau comprenant p noeuds interconnectés au moyen d'une pluralité de tronçons (p étant un nombre entier positif).

Elle a également pour objet un procédé consistant à déterminer un chemin comportant un minimum de noeuds pour aller du m-ième noeud au n-ième noeud dans un réseau comprenant p noeuds interconnctés au moyen d'une pluralité de tronçons (p étant un nombre entier positif), en effectuant une itération du procédé précédent. L'invention a également pour objet un procédé d'établissement pour un noeud déterminé du réseau, d'une table d'acheminement des messages, localisée en ce noeud, permettant de connaître instantanément la direction à emprunter pour aller de ce noeud à un quelconque autre noeud.

Une table d'acheminement locale ayant été déterminée pour chaque noeud du réseau, la table générale d'acheminement à travers le réseau est alors constituée par l'ensemble des tables d'acheminement locales.

Selon un aspect de l'invention correspondant au premier objet précité, le procédé de détermination du dernier noeud intermédiaire d'un chemin comportant un minimum de noeuds, pour aller du m-ième noeud au n-ième noeud, dans un réseau comprenatn p noeuds interconnectés au moyen d'une pluralité de tronçons (p étant un nombre entier positif), comporte les étapes suivantes:

—on détermine d'abord tous les tronçons directs du réseau,

—on établit ensuite et en met mémoire la matrice carrée $R_1 = \|a_{ij}\|^p{}_p$ telle que $a_{ij} = 0$ s'il n'y a aucun tronçon direct du i-ième au j-ième noeud et $a_{ij} = 1$ s'il existe un tronçon direct du i-ième au j-ième noeud,

—on détermine l'existence d'au moins un chemin en deux tronçons du m-ième noeud au n-ième noeud lorsque le tronçon direct n'existe pas, en comparant les éléments de même rang de la m-ième ligne et de la n-ième colonne de cette matrice $R_1$, l'existence et le rang d'éventuels éléments non nuls communs à la m-ième ligne et à la n-ième colonne, indiquant la présence et le quantième d'au moins un noeud intermédiaire d'un chemin à deux tronçons,

—en l'absence d'un tel élément non nul commun, par itération pour tout entier q variant de 2 à p−2 jusqu'à ce que l'on ait déterminé un chemin à (q+1) tronçons pour joindre le m-ième au n-ième noeud,

. on calcule la matrice carrée

$$X_q = R_{q-1} \cdot R_1 = \|x_{ij}\|^p{}_p$$

égale au produit des matrices $R_{q-1}$ et $R_1$, puis

. on établit la matrice carrée

$$R_q = \|b_{ij}\|^p{}_p$$

tel que $b_{ij} = 1$ si $x_{ij}$ ou $a_{ij}$ est différent de zéro et $b_{ij} = 0$ si $x_{ij}$ et $a_{ij}$ sont tous les deux nuls, et

. on compare les éléments de même rang de la m-ième ligne de la matrice $R_q$ et de la n-ième colonne de la matrice $R_1$, l'existence et le rang d'éventuels éléments non nuls communs indiquant la présence et le quantième d'au moins un

3

dernier noeud intermédiaire d'un chemin à q+1 tronçons.

On peut en outre:

—se limiter à calculer les éléments de la matrice carrée $X_q$ correspondant aux éléments nuls de la matrice $R_{q-1}$,

—se limiter à calculer la m-ième ligne des matrices $X_q$ et $R_q$ pour q supérieur ou égal à 2,

—si les tronçons ne sont par orientés, ne calculer les éléments de la matrice carrée $X_q$ que pour i inférieur à j ou j inférieur à i.

Selon un autre aspect de l'invention correspondant au deuxième objet précité, le procédé de détermination d'un chemin comportant un minimum de noeuds, pour aller du m-ième au n-ième noeud, dans un réseau comprenant p noeuds interconnectés au moyen d'une pluralité de tronçon (p étant un nombre entier positif), notamment destiné à l'acheminement aussi bien d'informations entre des calculateurs interconnectés que de communications téléphoniques entre des autocommutateurs interconnectés, mettant en oeuvre le procédé précédent, comprend les étapes suivantes:

—on déterminer le dernier noeud intermédiaire d'un chemin comportant un minimum de noeuds pour aller du m-ième au n-ième noeud, selon le procédé précédent, dont on met l'adresse en mémoire,

—puis on détermine, selon le procédé précédent, l'avant-dernier noeud intermédiaire qui est le dernier noeud intermédiaire d'un chemin comportant un minimum de noeuds pour aller du m-ième noeud au dernier noeud intermédiaire pour aller du m-ième au n-ième noeud, dont l'adresse a été mise en mémoire précédemment, l'adresse de l'avant-dernier noeud étant elle-même mise en mémoire. Puis, par itération, on détermine les adresses de tous les premiers noeuds intermédiaires et, par suite, un chemin comportant un minimum de noeuds pour aller du m-ième au n-ième noeud.

Iciencore, on peut:

—se limiter à calculer les éléments de la matrice carrée $X_q$ correspondant aux éléments nuls de la matrice $R_{q-1}$,

—se limiter à calculer la m-ième ligne des matrices $X_q$ et $R_q$ pour q supérieur ou égal 2, et

—si les tronçons ne sont pas orientés, ne calculer les éléments de la matrice carrée $X_q$ que pour i inférieur à j, ou j inférieur à i.

Selon un autre aspect de l'invention correspondant au troisième objet précité, le procédé d'établissement d'une table d'acheminement localisée dans un noeud du réseau soit, par exemple, le m-ième noeud, comporte les étapes du procédé ci-avant répétées p−2 fois au maximum pour tous les chemins pouvant être établis à partir du m-ième noeud.

La table ne comprend que le premier noeud à emprunter pour chacun des noeuds de destination.

Le procédé est renouvelé à chaque fois qu'une modification du réseau apparaît.

Dans le cas d'un réseau téléphonique, l'information d'une éventuelle modification du réseau peut, par exemple, être transmise à tous les noeuds par le réseau sémaphore ou par tout autre moyen.

Pour la mise en oeuvre du premier procédé décrit permettant de déterminer le dernier noeud intermédiaire d'un chemin comportant un minimum de noeuds pour aller du m-ième au n-ième noeud, le circuit comprend au moins en combinaison:

—un détecteur des tronçons directs,

—un circuit d'établissement de la matrice $R_1$,

—une mémoire où sont stockées la matrice $R_1$ et la m-ième ligne de la matrice $R_q$,

—un dispositif de lecture de la mémoire connecté à un circuit permettant de comparer les éléments de même rang de la m-ième ligne de la matrice $R_q$ et ceux de la n-ième colonne de la matrice $R_1$ et de déterminer le rang de tels éléments non nuls,

—un circuit mettant en mémoire l'adresse correspondant au rang d'un élément non nul déterminé précédemment,

—un dispositif incrémentant d'une unité de valeur de q s'il n'y a pas d'élément commun non nul de même rang entre les dites ligne et colonne,

—un circuit d'établissement de la m-ième ligne de la matrice $X_{q+1}$,

—un circuit d'établissement de la m-ième ligne de la matrice $R_{q+1}$.

Pour la mise en oeuvre du dernier procédé décrit permettant d'établir une table d'acheminement des messages à partir du m-ième noeud, le circuit doit comporter en combinaison:

—un détecteur des tronçons directs,

—un circuit d'établissement de la matrice $R_1$,

—une mémoire où sont stockées la matrix $R_1$ et la m-ième ligne de la matrice $R_q$,

—un dispositif de lecture de la mémoire connecté à un circuit permettant de comparer les éléments de même rang de la m-ième ligne de la matrice $R_q$ et ceux de la n-ième colonne de la matrice $R_1$ et de déterminer le rang de tels éléments non nuls,

—un circuit mettant en mémoire l'adresse correspondant au rang d'un élément non nul déterminé précédemment,

—un circuit calculant et mémorisant l'adresse du premier noeud de chaque chemin déterminé à nombre minimum de noeuds pour aller du noeud m à un autre noeud du réseau,

—un circuit déterminant les noeuds n du réseau tels que le premier noeud d'un chemin comportant un minimum de noeuds pour aller du m-ième au n-ième noeud n'a pas encore été déterminé,

—un dispositif choisissant à q fixé un noeud n parmi ceux déterminés par le circuit précédent de telle façon quil les considère tous et une seule fois durant un cycle à q fixé,

—un dispositif incrémentant d'une unité de valeur de q, lorsque le dispositif précédent a considéré tous le noeuds n déterminés par le circuit précédent et qu'il existe encore au moins un noeud n tel que le premier noeud d'un chemin comportant un minimum de noeuds pour aller du m-ième au n-ième noeud n'a pas encore été déterminé,

—un circuit d'établissement de la m-ième ligne de la matrice $X_{q+1}$,

—un circuit d'établissement de la m-ième ligne de la matrice $R_{q+1}$,

—un circuit qui, pour tout noeud n du réseau tel qu'il existe plusieurs chemins à nombre minimal de noeuds pour aller du m-ième au n-ième noeud et tel que les premiers noeuds de ce chemins sont différents, fait le choix d'un de ces premiers noeuds,

—un circuit qui mémorise le premier noeud choisi et qui forme la table d'acheminement à partir du m-ième noeud.

L'invention sera mieux comprise et d'autres buts, avantages et caractéristiques de celle-ci apparaîtront plus clairement à la lecture de la description qui suit donnée à titre non limitatif et à laquelle deux planches de dessins sont annexées.

La figure 1 représente schématiquement un réseau simple à liaisons bidirectionnelles et comportant six noeuds.

La figure 2 représente schématiquement un réseau simple à tronçons orientés et comprenant quatre noeuds.

La figure 3 représente schématiquement un circuit pour la mise en oeuvre du procédé de détermination du dernier noeud intermédiaire d'un chemin comportant un minimum de noeuds pour aller du m-ième noeud au n-ième noeud.

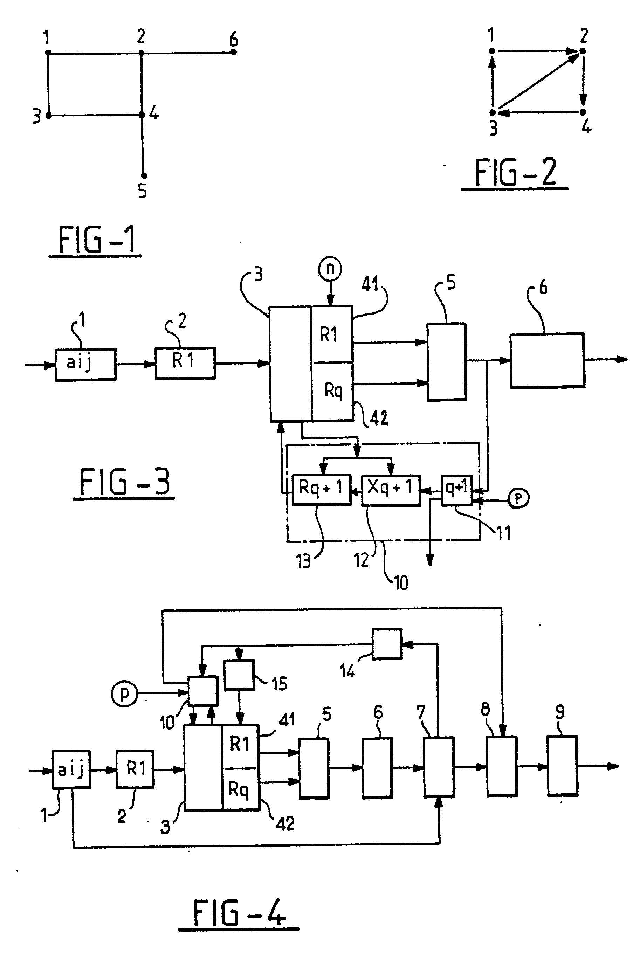

Enfin, la figure 4 représente schématiquement un circuit permettant d'établir une table d'acheminement localisée en un noeud du réseau conformément à l'invention.

En référence maintenant à la figure 1 représentant un exemple de réseau à six noeuds numérotés de 1 à 6 interconnectés par certains tronçons, et sachant qu'il existe des tronçons directs entre les noeuds 1 et 2, 2 et 6, 2 et 4, 1 et 3, 3 et 4, 4 et 5, on peut établir la matrice carrée $R_1 = \|a_{ij}\|^6_6$ telle que $a_{ij} = 0$ s'il n'existe pas de tronçon direct du i-ième au j-ième noeud et $a_{ij} = 1$ s'il existe un tel tronçon direct. On obtient alors:

$$R_1 = \begin{vmatrix} 1 & 1 & 1 & 0 & 0 & 0 \\ 1 & 1 & 0 & 1 & 0 & 1 \\ 1 & 0 & 1 & 1 & 0 & 0 \\ 0 & 1 & 1 & 1 & 1 & 0 \\ 0 & 0 & 0 & 1 & 1 & 0 \\ 0 & 1 & 0 & 0 & 0 & 1 \end{vmatrix}$$

On peut alors déterminer, dans le cas où le tronçon direct n'existe pas, s'il existe au moins un chemin à deux tronçons du m-ième au n-ième noeud en comparant les éléments de même rang de la m-ième ligne et ceux de la n-ième colonne. Cette matrice étant symétrique puisque les tronçons sont bi-directionnels la comparaison est simplifiée.

Dans cet exemple, il n'existe pas de tronçon direct du 1er au 6ème noeud. De façon à déterminer s'il existe au moins un chemin à deux tronçons du 1er au 6ème noeud, on compare les éléments de même rang des 1ère et 6ème lignes (ou colonnes) de la matrice: 111000 et 010001. On constate qu'il existe au moins un élément non nul commun et que cet élément et le deuxième. On peut donc conclure qu'il existe un chemin à deux tronçons du 1er au 6ème noeud passant par le deuxième noeud.

Da même, il n'existe pas de tronçon direct du 1er au 5ème noeud. Pour déterminer s'il existe un chemin à deux tronçons, on compare alors les éléments de même rang des 1ère et 5ème lignes de la matrice: 111000 et 000110 qui n'ont aucun élément commun non nul. On en conclut qu'il n'existe pas de chemin à deux tronçons du 1er au 5ème noeud.

De ce fait, il est alors nécessaire de calculer la matrice $X_2$ qui est égale au produit

$$R_{2-1} \cdot R_1 \text{ soit } R^2_1 = \|x_{ij}\|^6_6.$$

Due fait de la symétrie de $R_1$ le calcul est aisé d'autant plus que les seuls élément intéressants de cette matrice $X_2$ sont les éléments correspondant aux éléments nuls de la matrice $R_1$.

Dans l'exemple, on obtient donc la matrice suivante dans laquelle le symbole x désigne un élément non nul.

$$X_2 = \begin{vmatrix} x & x & x & x & 0 & x \\ x & x & x & x & x & x \\ x & x & x & x & x & 0 \\ x & x & x & x & x & x \\ 0 & x & x & x & x & 0 \\ x & x & 0 & x & 0 & x \end{vmatrix}$$

On peut alors établir la matrice $R_2 = \|b_{ij}\|^6_6$ telle que $b_{ij} = 1$ si $x_{ij}$ au $a_{ij}$ est différent de zéro et que $b_{ij} = 0$ si $x_{ij}$ et $a_{ij}$ sont nuls. On obtient ainsi dans l'exemple de la figure 1:

$$R_2 = \begin{vmatrix} 1 & 1 & 1 & 1 & 0 & 1 \\ 1 & 1 & 1 & 1 & 1 & 1 \\ 1 & 1 & 1 & 1 & 1 & 0 \\ 1 & 1 & 1 & 1 & 1 & 1 \\ 0 & 1 & 1 & 1 & 1 & 0 \\ 1 & 1 & 0 & 1 & 0 & 1 \end{vmatrix}$$

En reprenant alors le problème posé pour un chemin du 1er au 5ème noeud pour lesquels on sait maintenant qu'il n'y a pas de tronçon direct ni de chemin à deux tronçons, on peut voir s'il existe un chemin à trois tronçons en comparant les éléments de même range de la 1ère ligne de $R_2$ et de la 5ème colonne de $R_1$: 111101 et 000110. On constate alors que le quatrième élément est commun non nul. On en conclut qu'il existe un chemin à trois tronçons dont le dernier noeud intermédiaire est le quatrième.

On peut alors compléter le chemin sachant qu'entre le quatrième et le premier noeud il n'y a plus que deux tronçons. On utilise alors la matrice $R_1$ et l'on compare les éléments de même rang des 1ère et 4ème lignes (ou colonnes): 111000 et 011110. On constate alors que deux chemins sont possibles puisque les deuxième et troisième éléments sont communs non nuls. En conclusion, pour aller du premier au cinquième noeud, il faut d'abord passer par le deuxième ou le troisième noeud puis passer par le quatrième noeud.

Dans l'exemple de la figure 1, les tronçons ne sont pas orientés et les transmissions peuvent être effectuées de façon bi-directionnelle. De ce fait, les matrices $R_1$ et $X_q$ sont symétriques et les calculs peuvent être simplifiés puisque l'on peut ne déterminer que les éléments $x_{ij}$ de $X_q$ pour i inférieur à j ou j inférieur à i.

En référence maintenant à la figure 2 représentant un exemple de réseau de quatre noeuds numérotés de 1 à 4 donc, les tronçons sont orientés, la matrice $R_1$ n'est pas symétrique.

Ainsi en reprenant le calcul pour le cas représenté sur cette figure 2 on a:

$$R_1 = \begin{vmatrix} 1 & 1 & 0 & 0 \\ 0 & 1 & 0 & 1 \\ 1 & 1 & 1 & 0 \\ 0 & 0 & 1 & 1 \end{vmatrix}$$

Avec le même raisonnement que précédemment, pour aller du premier au quatrième noeud, on constate qu'il n'existe qu'un seul chemin à deux tronçons passant par le deuxième noeud; pour aller du quatrième noeud au deuxième, il n'existe qu'un seul chemin à deux tronçons passant par le troisième noeud.

On calcule alors $X_2$ et $R_2$:

$$X_2 = \begin{vmatrix} x & x & 0 & x \\ 0 & x & x & x \\ x & x & x & x \\ x & x & x & x \end{vmatrix}$$

et

$$R_2 = \begin{vmatrix} 1 & 1 & 0 & 1 \\ 0 & 1 & 1 & 1 \\ 1 & 1 & 1 & 1 \\ 1 & 1 & 1 & 1 \end{vmatrix}$$

Avec le même raisonnement, on constate que pour aller du deuxième au premier noeud, le dernier noeud intermédiaire d'un chemin à trois tronçons est le troisième, puis avec $R_1$ on constate que le noeud précédent est le quatrième. Ainsi pour aller du deuxième au premier noeud, il faut d'abord passer par le quatrième puis par le troisième noeud.

On peut donc établir une table générale d'acheminement entre tous les noeuds du réseau en déterminant pour chaque noeud du réseau une table d'acheminement localisée en répétant les étapes du procédé de détermination d'un chemin comportant un minimum de noeuds. Quelqu'elle soit, cette table peut être aisément modifiée dès qu'une modification du réseau apparaît, sont par disparition ou apparition d'un noeud, soit par rupture ou création d'un nouveau tronçon, soit par saturation d'un noeud ou d'un tronçon.

On a représenté schématiquement figure 3 un circuit permettant de déterminer le dernier noeud intermédiaire d'un chemin comportant un minimum de noeuds pour aller du m-ième noeud au n-ième noeud dans un réseau comportant p noeuds interconnectés au moyen d'une pluralité de tronçons (p étant un nombre entier positif) en prenant pour hypothèse que ce circuit est inclus dans l'électronique sise au m-ième noeud et qu'il n'existe pas de tronçon direct du m-ième noeud au n-ième noeud. Un tel circuit comprend d'abord un détecteur 1 grâce auquel on détermine les tronçons directs, c'est-à-dire les éléments $a_{ij}$ de la matrice $R_1$ qui est établie par le circuit 2 relié au détecteur 1. La sortie du circuit 2 est relié à une mémoire 3 dans laquelle sont stockées au moins la matrice $R_1$ et la dernière m-ième ligne de la matrice $R_q$ calculée. Cette mémoire 3 est pourvue en sortie d'un dipositif de lecture 41, 42 permettant d'extraire de la mémoire les éléments respectivement de la n-ième colonne de $R_1$ lorsque l'on indique à la partie 41 du dispositif l'adresse du n-ième noeud où le message doit être expédié, et de la m-ième ligne de la matrice $R_q$ étant entendu que le circuit est localisé au m-ième noeud. Les deux sorties de ce dispositif de lecture 41, 42 sont connectées au circuit 5 permettant de comparer successivement les éléments de même rang des ligne et colonne extraites de la mémoire 3 et de déterminer le rang de tels éléments non nuls. Un circuit 6, connecté à la sortie du circuit 5, met en mémoire toute adresse i correspondant au rang d'un élément non nul déterminé par le circuit 5, i étant donc l'adresse d'un dernier noeud intermédiaire d'un chemin du m-ième au n-ième noeud, à q tronçons.

Si le circuit 5 ne détermine pas d'éléments non nuls, en 11, le dispositif 10 incrémente d'une unité la valeur de q, initialement égale à 1 et la compare à p. Si q est égal à p alors, il n'existe pas de chemin pour aller du m-ième au n-ième noeud et le circuit ne fournit pas de résultat. Sinon, le dispositif 10 calcule la m-ième ligne de la matrice $X_{q-1}$ en 12 à partir de la matrice $R_1$ et de la m-ième ligne de la matrice $X_q$ stockées dans la mémoire 3, puis la m-ième ligne de la matrice $R_{q+1}$ en 13 à partir de la matrice $R_1$ stockée dans la mémoire 3 et de la m-ième ligne de la matière $X_{q+1}$ précédemment calculée, cette dernière étant alors mise en mémoire 3 en remplacement de la m-ième ligne de la matrice $R_q$ et le circuit 5 effectue une comparaison.

Tant que q est inférieur à p, le cycle peut s'effectuer à nouveau jusqu'à ce qu'à la sortie du circuit 5 on ait déterminé le rang d'un élément non nul commun aux ligne et colonne extraites de la mémoire 3. On a représenté schématiquement figure 4 un circuit permettant l'établissement d'une table d'acheminement, localisée en un noeud d'u réseau, en particulier au m-ième noeud.

Un tel circuit permet de déerminer un chemin comportant un minimum de noeuds pour aller du m-ième noeud à un autre noeud du réseau et ceci pour tous les noeuds du réseau, le réseau comportant p noeuds interconnectés au moyen d'une pluralité de tronçons (p étant un nombre entier positif).

Le principe de fonctionnement de ce circuit est le suivant: q étant fixé, (il est initialement égal à 1) et pour chaque élément d'un ensemble N comprenant tous les noeuds n tels que le premier noeud d'un chemin comportant un nombre minimal de noeuds pour aller du m-ième au n-ième noeud n'a pas été déterminé, si le chemin comportant un minimum de noeuds pour aller du m-ième au n-ième noeud appartenant à N est un chemin à q tronçons, on détermine le dernier noeud intermédiaire d'un tel chemin. Les adresses des noeuds ainsi déterminés sont mémorisées et servent à déterminer l'adresse du premier noeud intermédiaire de chaque chemin comportant un minimum de noeuds pour aller du m-ième noeud à un autre noeud du réseau. N est mis à jour à chaque fois qu'un de ses éléments a été considéré. Quand tous les éléments de N ont été considérés une fois et si N contient encore des éléments q est incrémenté et on effectue de nouveau le cycle. Ceci jusqu'à ce que les adresses des premiers noeuds de tous les chemins comportant un minimum de noeuds aient été déterminées.

Le circuit représenté à la figure 4 a des composants communs avec celui de la figure 3 qui sont reprérés par les mêmes numéros. Il comprend d'abord un détecteur 1 grâce auquel on détermine les tronçons directs, c'est-à-dire les éléments $a_{ij}$ de la matrice $R_1$ qui est établie par le circuit 2 relié au détecteur 1. La sortie du circuit 2 est reliée à une mémoire 3 dans laquelle sont stockées au moins la matrice $R_1$ et la dernière m-ième ligne de la matrice $R_q$ calculée. Cette mémoire 3 est pourvue en sortie d'un dispositif de lecture 41, 42 permettant d'extraire de la mémoire les éléments respectivement de la n-ième colonne de $R_1$ lorsque l'on indique à la partie 41 du dispositif l'adresse du n-ième noeud où le message doit être expédié et de la m-ième ligne de la matrice $R_q$ étant entendu que le circuit est localisé au m-ième noeud. Les deux sorties de ce dispositif de lecture 41, 42 sont connectées à circuit 5 permettant de comparer successivement les éléments de même rang des ligne et colonne extraites de la mémoire 3 et de déterminer le rang de tels éléments non nuls. Un circuit 6 connecté à la sortie du circuit 5, met en mémoire toute adresse i correspondant au rang d'un élément non nul déterminé par le circuit 5, i étant donc l'adresse d'un dernier noeud intermédiaire d'un chemin du m-ième au n-ième noeud à q tronçons.

Le circuit 6 contient donc les adresses des derniers noeuds intermédiaires de chaque chemin déjà déterminé à nombre minimal de noeuds pour aller du m-ième noeud à un autre noeud du réseau.

Le circuit 6 est relié à un circuit 7 qui calcule et mémorise l'adresse du premier noeud de chaque chemin déterminé à nombre minimal de noeuds pour aller du noeud m à un autre noeud du réseau. Ces adresses sont déterminées par recherche itérative à partir des données du circuit 6.

Le détecteur 1 est relié au circuit 7 de façon à ce que ce circuit mémorise tous les chemins directs.

Le circuit 7 est relié d'une part à un dispositif 14 qui met à jour l'ensemble N, qui comprend tous les noeuds n tels que le premier noeud d'un chemin comportant un minimum de noeuds pour aller du m-ième au n-ième noeud n'a pas encore été déterminé.

Tant que N n'a pas été entièrement parcouru, le dispositif 15 choisit un nouvelle valeur de n. Lorsque N a été parcouru et s'il contient encore des éléments, en 11, le dispositif 10 incrémente d'une unité la valeur de q, initialement égale à 1 et la compare à p. Si q est égal à p, alors il n'existe pas de chemin pour aller du m-ième noeud à un noeud quelconque de N. Le dispositif 11 en informe un circuit 8 auquel il est d'autre part relié.

Sinon le dispositif 10 calcule la m-ième ligne de la matrice $X_{q+1}$ en 12 à partir de la matrice $R_1$ et de la m-ième ligne de la matrice $X_q$ stockées dans la mémoire 3, puis la m-ième ligne de la matrice $R_{q+1}$ en 13 à partir de la matrice $R_1$ stockée dans la mémoire 3 et de la m-ième ligne de la matrice $X_{q+1}$ précédemment calculée. Le cycle recommence tant que N contient encore des éléments et que q est strictement inférieur à p.

Le circuit 7 est d'autre part relié au circuit 8.

Lorsque N ne contient plus d'éléments ou que q est égal à p, pour tous les noeuds n du réseau tels qu'il existe plusieurs chemins à nombre minimum de noeuds pour aller du m-ième au n-ième noeud et tels que les premiers noeuds de ces chemins sont différents, le circuit 8 effectue le choix d'un de ces premiers noeuds, selon des critères de fréquence, de trafic ou de tout autre ordre.

Le circuit 8 est lui-même relié à un circuit 9 qui mémorise le premier noeud choisi et qui forme la table d'acheminement ou m-ième noeud. Pour déterminer la table générale d'acheminement à travers le réseau, il suffira d'établir pour tous les autres noeuds du réseau, un table d'acheminement localisée, comme cela vient d'être exposé pour le m-ième noeud.

**Revendications**

1. Procédé de détermination du dernier noeud intermédiaire d'un chemin comportant un minimum de noeuds, pour aller du m-ième noeud au n-ième noeud, dans un réseau compreant p noeuds interconnectés au moyen d'une pluralité de tronçons (p étant un nombre entier positif), notamment destiné à l'acheminement aussi bien d'informations entre des calculateurs interconnectés que de communications téléphoniques entre des autocommutateurs interconnectés, caractérisé en ce qu'il comprend les étapes suivantes:

—on détermine d'abord tous les tronçons directs du réseau,

—on établit ensuite et on met en mémoire la matrice carrée $R_1 = \|a_{ij}\|^p_p$ telle que $a_{ij}=0$ s'il n'y a aucun tronçon direct du i-ième au j-ième noeud et $a_{ij}=1$ s'il existe un tronçon direct du i-ième au j-ième noeud,

—on détermine l'existence d'au moins un chemin en deux tronçons du m-ième au n-ième noeud, lorsque le tronçon direct n'existe pas, en comparant les éléments de même rang de la m-ième ligne et de la n-ième colonne de cette matrice $R_1$, l'existence et le rang d'éventuels éléments non nuls communs à la m-ième ligne et à la n-ième colonne indiquant la présence et le quantième d'un noeud intermédiaire d'au moins un chemin à deux tronçons,

—en l'absence d'un tel élément non nul commun, par itération pour tout qu variant de à $p-2$ jusqu'à ce que l'on ait déterminé un chemin de $(q+1)$ tronçons pour joindre le m-ième noeud au n-ième noeud,

. on calcule la matrice carrée

$$X_q = R_{q-1} \cdot R_1 = \|x_{ij}\|^p_p$$

égale au produit des matrices $R_{q-1}$ et $R_1$, puis

. on établit la matrice carrée

$$R_q = \|b_{ij}\|^p_p$$

telle que $b_{ij}=1$ si $x_{ij}$ ou $a_{ij}$ est différent de zéro et $b_{ij}=0$ si $x_{ij}$ et $a_{ij}$ sont tous les deux nuls, et

. on compare les éléments de même rang de la m-ième ligne de la matrice Rq et de la n-ième colonne de la matrice $R_1$, l'existence et le rang d'éventuels éléments non nuls communs indiquant la présence et le quantième d'au moins un dernier noeud intermédiaire possible d'un chemin à q+1 tronçons.

2. Procédé selon la revendication 1 caractérisé en ce que l'on se limite à calculer les éléments de la matrice carrée $X_q$ correspondant aux éléments nuls de la matrice $R_{q-1}$.

3. Procédé selon la revendication 1 ou 2, caractérisé en ce que, si les tronçons ne sont pas orientés, on ne calcule les éléments de la matrice carrée $X_q$ que pour i inférieur à j ou que pour j inférieur à i.

4. Procédé selon la revendication 2 ou 3, caractérisé en ce que l'on ne calcule que la m-ième ligne des matrices $X_q$ et $R_q$ pour q supérieur à 2.

5. Procédé d'établissement d'un chemin comportant un minimum de noeuds, pour aller du m-ième au n-ième noeud, dans un réseau comprenant p noeuds interconnectés au moyen d'une pluralité de tronçons (p étant un nombre entier positif), notamment destiné à l'acheminement aussi bien d'informations entre des calculateurs interconnectés que de communications téléphoniques entre des autocommutateurs interconnectés, mettant en oeuvre le procédé selon l'une quelconque des revendications 1 à 4 caractérisé en ce qu'il comprend les étapes suivantes:

—on détermine le dernier noeud intermédiaire d'un chemin comportant un minimum de noeuds pour aller du m-ième noeud au n-ième noeud selon le procédé décrit dans l'une quelconque des revendications 1 à 4 dont on met l'adresse en mémoire,

—puis on détermine, selon le procédé décrit dans l'une quelconque des revendications 1 à 4, le dernier noeud intermédiaire d'un chemin comportant un minimum de noeuds pour aller du m-ième noeud au dernier noeud intermédiaire déterminé précédemment, on effectue une itération jusqu'à ce que le chemin entre le m-ième noeud et le dernier noeud intermédiaire ne comporte plus qu'un unique tronçon.

6. Procédé selon la revendication 5 caractérisé en ce que l'on se limite à calculer les éléments de la matrice carrée $X_q$ correspondant aux éléments nuls de la matrice $R_{q-1}$.

7. Procédé selon la revendication 6 caractérisé en ce que, si les tronçons ne sont par orientés, on ne calcule les éléments de la matrice carrée $X_q$ que pour i inférieur à j ou que pour j inférieur à i.

8. Procédé selon la revendication 6 ou 7, caractérisé en ce que l'on ne calcule que les m-ième ligne des matrices $X_q$ et $R_q$ pour q supérieur ou égal à 2.

9. Procédé d'établissement d'une table d'acheminement localisée dans le m-ième noeud caractérisé en ce que le procédé selon l'une quelconque des revendications 5 à 8 est répété $p-2$ fois au maximum pour chacun des chemins possibles pouvant être établis à partir du m-ième noeud.

10. Procédé selon la revendication 9 caractérisé en ce qu'il est renouvelé chaque fois qu'une modifications du réseau apparaît.

11. Procédé d'établissement d'une table générale d'acheminement à travers le réseau caractérisé en ce que le le procédé selon la revendication 9 est répété pour tous les noeuds du réseau.

12. Circuit pour la mise en oeuvre du procédé selon la revendication 1, caractérisé en ce qu'il comprend, en combinaison:

—un détecteur (1) de tronçons directs,

—un circuit (2) d'établissement de la matrice $R_1$,

—une mémoire (3) où sont stockées la matrice $R_1$ et la m-ième ligne de la matrice $R_q$,

—un dispositif de lecture (41, 42) de la dite mémoire (3) connecté à un circuit (5) permettant de comparer les éléments de même rang de la m-ième ligne de la matrice $R_q$ et ceux de la n-ième colonne de la matrice $R_1$ et de déterminer le rang de tels éléments non nuls.

—un circuit (6) mettant en mémoire l'adresse correspondant au rang d'un élément non nul déterminé précédemment,

—un dispositif (11) incrémentant d'une unité de valeur de q s'il n'y a pas d'élément commun non nul de même rang entre les dites ligne et colonne,

—un circuit (12) d'établissement de la m-ième ligne de la matrice $X_{q+1}$,

—un circuit (13) d'établissement de la m-ième ligne de la matrice $R_{q+1}$.

13. Circuit selon la revendication 12 caractérisé en ce que ledit dispositif (11) compare la valeur de q à celle de p.

14. Circuit pour la mise en oeuvre du procédé selon la revendication 9 caractérisé en ce qu'il comprend, en combinaison;

—un détecteur (1) des tronçons directs,

—un circuit (2) d'établissement de la matrice $R_1$,

—une mémoire (3) où sont stockées la matrice $R_1$ et la m-ième ligne de la matrice $R_q$,

—un dispositif de lecture (41, 42) de la dite mémoire (3) connecté à un circuit (5) permettant de comparer les éléments de même rang de la m-ième ligne de la matrice $R_q$ et ceux de la n-ième colonne de la matrice $R_1$ et de déterminer le rang de tels éléments non nuls,

—un circuit (6) mettant en mémoire l'adresse correspondant au rang d'un élément non nul déterminé précédemment,

—un circuit (7) calculant et mérmorisant l'adresse du premier noeud de chaque chemin déterminé à nombre minimum de noeuds pour aller du m-ième noeud à un autre noeud du réseau,

—un circuit (14) déterminant les noeuds n du réseau tels que le premier noeud d'un chemin comportant un minimum de noeuds pour aller du m-ième au n-ième noeud n'a pas encore été déterminé,

—un dispositif (15) choisissant à q fixé un noeud n parmi ceux déterminés par le circuit précédent de telles façon qu'il les considère tous et une seule fois durant un cycle à q fixé,

—un dispositif (11) incrémentant d'une unité de valeur de q, lorsque ledit dispositif précédent (15) a considéré tous les noeuds n déterminés par ledit circuit précédent (14) et qu'il existe encore au moins un noeud n tel que le premier noeud d'un chemin comportant un minimum de noeuds pour aller du m-ième au n-ième noeud n'a pas encore été déterminé,

—un circuit (12) d'établissement de la m-ième ligne de la matrice $X_{q+1}$,

—un circuit (13) d'établissement de la m-ième ligne de la matrice $R_{q+1}$,

—un circuit (8) qui, pour tout noeud n du réseau tel qu'il existe plusieurs chemins à nombre minimal de noeuds pour aller du m-ième au n-ième noeud et tel que les premiers noeuds de ces chemins sont différents, effectue le choix d'un de ces premiers noeuds,

—un circuit (9) qui mémorise le premier noeud choisi et qui forme la table d'acheminement à partir du m-ième noeud.

15. Circuit selon la revendication 14, caractérisé en ce que ledit dispositif (11) compare la valeur de q à celle de p est relié audit circuit (8).

## Patentansprüche

1. Verfahren zur Bestimmung des letzten Zwischenknotens eines Weges, der ein Minimum von Knoten enthält, um in einem Netzwerk, das p Knoten enthält (p ist eine ganze, positive Zahl), welche mit einer Vielzahl von Zweigen untereinander verbunden sind, von m-ten Knoten zum n-ten Knoten zu gelangen, das besonders zum Informationsaustausch, wie Information zwischen verbundenen Rechnern ode zur telefonischen Kommunikation zwischen verbundenen automatischen Vermittlungen, geeignet ist, und das dadurch gekennzeichnet ist, das es folgende Schritte aufweist:

—anfangs bestimmt man alle direkten Zweige des Netzwerks,

—dann erstellt und speichert man die quadratische Matrix $R_1 = \|a_{ij}\|^p{}_p$ so, daß $a_{ij}=0$ ist, wenn kein direkter Zweig zwischen dem i-ten und dem j-ten Knoten ist und $a_{ij}=1$ ist, wenn ein direkter Zweig zwischen dem i-ten und dem j-ten Knoten existiert,

—man legt die Existenz zumindest eines Weges aus zwei Zweigen vom m-ten zum n-ten Knoten fest, wenn der direkte Zweig nicht existiert, indem man die gleichrangigen Elemente der m-ten Zeile und der n-ten Spalte der Matrix $R_1$ vergleicht, wobei die Existenz und der Rang etwaiger gemeinsamer Elemente ungleich Null in der m-ten Zeile und der n-ten Spalte das Vorhandensein sowie die Nummer eines Zwischenknotens aus mindestens einem Weg aus zwei Zweigen anzeigt,

—beim Nichtvorhandensein eines solchen gemeinsamen Elements ungleich Null wird q iterativ zwischen 2 und $p-2$ variiert, bis man einen Weg aus $(q+1)$ Zweigen gefunden hat, um den m-ten Knoten mit dem n-ten Knoten zu verbinden

. man berechnet die quadratische Matrix

$$X_q = R_{q-1} \cdot R_1 = \|x_{ij}\|^p{}_p$$

gleich dem Produkt der Matrizen $R_{q-1}$ ud $R_1$, dann

. stellt man die quadratische Matrix $R_q = \|b_{ij}\|^p{}_p$, so daß $b_{ij}=1$ wenn $x_{ij}$ oder $a_{ij}$ von Null verschieden ist und $b_{ij}=0$ wenn $x_{ij}$ und $a_{ij}$ beide Null sind und

. man vergleicht die gleichrangigen Elemente der m-ten Zeile der Matrix $R_q$ und der n-ten Spalte der Matrix $R_1$, wobei die Existenz und der Rang etwaiger gemeinsamer von Null verschiedener Elemente das Vorhandensein sowie die Nummer zumindest eines möglichen letzten Zwischenknotens aus einem Weg aus $q+1$ Zweigen anzeigt.

2. Verfahren nach Anspruch 1, dadurch gekennzeichnet, daß man sich beim Bereichnen der Elemente der quadratischen Matrix $X_q$ auf die Elemente entsprechend den Elementen gleich Null der Matrix $R_{q-1}$ beschränkt.

3. Verfahren nach Anspruch 1 oder 2, dadurch gekennzeichnet, daß, wenn die Zweige nicht gerichtet sind, man die Elemente der quadratischen Matrix $X_q$ nur berechnet, wenn i kleiner als j oder j kleiner als i ist.

4. Verfahren nach Anspruch 2 oder 3, dadurch gekennzeichnet, daß man die m-te Zeile der Matrizen $X_q$ und $R_q$ nur für q größer als 2 berechnet.

5. Verfahren zur Erstellung eines Weges, der ein Minimum von Knoten aufweist, um in einem Netzwerk, das p Knoten enthält (p ist eine ganze, positive Zahl), welche mit einer Vielzahl von Zweigen untereinander verbunden sind, vom m-ten Knoten zum n-ten Knoten zu gelangen, das besonders zum Informationsaustausch, wie Information zwischen verbundenen Rechnern oder telefonische Kommunikation zwischen verbundenen automatischen Vermittlungen, geeignet ist, das von dem Verfahren nach einem der Ansprüche 1 bis 4 Gebrauch macht und das durch folgende Schritte gekennzeichnet ist:

—man bestimmt den letzten Zwischenknoten eines Weges, der ein Minimum von Knoten enthält, um vom m-ten Knoten zum n-ten Knoten zu gelangen nach einem der Ansprüche 1 bis 4 beschriebenen Verfahren,

—dann bestimmt man mit dem Verfahren nach einem der Ansprüche 1 bis 4, den letzten Zwischenknoten eines Weges, der ein Minimum von Knoten aufweist, um vom m-ten Knoten zum letzten Zwischenknoten, der vorher bestimmt wurde, zu gelangen, dazu führt man eine Iteration durch, bis der Weg zwischen dem m-ten Knoten und dem letzten Zwischenknoten nicht mehr als einen Zweig aufweist.

6. Verfahren nach Anspruch 5, dadurch gekennzeichnet, daß man sich beim Berechnen der Elemente der quadratischen Matrix $X_q$ auf die Elemente entsprechend den Elementen gleich Null der Matrix $R_{q-1}$ beschränkt.

7. Verfahren nach Anspruch 6, dadurch gekennzeichnet, daß, wenn die Zweige nicht gerichtet sind, man die Elemente der quadratischen Matrix $X_q$ nur berechnet, wenn i kleiner als j oder j kleiner als i ist.

8. Verfahren nach Anspruch 6 oder 7, dadurch gekennzeichnet, daß man die m-te Zeile der Matrizen $X_q$ und $R_q$ nur für q größer als oder gleich 2 berechnet.

9. Verfahren zum Aufstellen einer dem m-ten Knoten zugeordneten Weiterleitungs-Tabelle, dadurch gekennzeichnet, daß das Verfahren gemäß irgendeinem der Ansprüche 5 bis 8 höchstens p−2 mal wiederholt wird für jeden der möglichen Wege, die vom m-ten Knoten ab erstellt können.

10. Verfahren nach Anspruch 9, dadurch gekennzeichnet, daß es jedesmal wiederholt wird, wenn eine Modifikation des Netzwerkes auftritt.

11. Verfahren zur Aufstellung einer allgemeinen Weiterleitungs-Tabelle für das gesamte Netzwerk, dadurch gekennzeichnet, daß das Verfahren nach Anspruch 9, für jeden der Knoten des Netzwerks wiederholt wird.

12. Schaltung zur Durchführung des Verfahrens nach Anspruch 1, dadurch gekennzeichnet, daß es in Kombination aufweist:

—einen Detektionvorrichtung (1) für direkte Zweige,

—einen Schaltkreis (2) zur Aufstellung der Matrix $R_1$,

—einen Speicher (3), in dem die Matrix $R_1$ und die m-te Zeile der Matrix $R_q$ gespeichert sind,

—eine Lesevorrichtung (41, 42) für den Speicher (3), die mit einem Schaltkreis (5) verbunden ist, welcher das Vergleichen der gleichrangigen Elemente der m-ten Zeile der Matrix $R_q$ mit denen der n-ten Spalte der Matrix $R_1$ sowie die Bestimmung des Ranges dieser Elemente ungleich Null erlaubt,

—einen Schaltkreis (6), der die Adresse entsprechend dem Rang eines vorher bestimmten Elementes ungleich Null einspeichert,

—eine Vorrichtung (11), die den Wert von q um eine Einheit erhöht, wenn es kein gemeinsames gleichrangiges Element ungleich Null zwischen der genannten Zeile und der genannten Spalte gibt,

—einen Schaltkreis (12) zur Aufstellung der m-ten Zeile der Matrix $X_{q+1}$, und

—einen Schaltkreis (13) zur Aufstellung der m-ten Zeile der Matrix $R_{q+1}$.

13. Schaltkreis nach Anspruch 12, dadurch gekennzeichnet, daß die Vorrichtung (11) den Wert von q mit dem von p vergleicht.

14. Schaltung zur Durchführung des Verfahrens nach Anspruch 9, dadurch gekennzeichnet, daß es in Kombination aufweist:

—einen Detektionvorrichtung (1) für direkte Zweige,

—einen Schaltkreis (2) zur Aufstellung der Matrix $R_1$,

—einen Speicher (3), in dem die Matrix $R_1$ und die m-te Zeile der Matrix $R_q$ gespeichert sind,

—eine Lesevorrichtung (41, 42) für den Speicher (3), die mit einem Schaltkreis (5) verbunden ist, welcher das Vergleichen der gleichrangigen Elemente der m-ten Zeile der Matrix $R_q$ mit denen der n-ten Spalte der Matrix $R_1$ sowie die Bestimmung des Ranges dieser Elemente ungleich Null erlaubt,

—einen Schaltkreis (6) der die Adresse entsprechend dem Rang eines vorher bestimmten Elementes ungleich Null einspeichert,

—einen Schaltkreis (7) der die Adresse des ersten Knoten jedes Weges mit minimaler Anzahl von Knoten, um von m-ten Knoten zu einem anderen Knoten des Netzwerkes zu gelangen, berechnet und abspeichert,

—einen Schaltkreis (14), der solche Knoten n des Netzwerkes festlegt, wie der erste Knoten eines Weges, der ein Minimum von Knoten aufweist, um vom m-ten zum n-ten Knoten zu gelangen, nicht noch einmal bestimmt wird,

—eine Vorrichtung (15), die für ein festes q einen Knoten n aus den von dem vorhergehenden Schaltkreis bestimmten Knoten so auswählt, daß er alle Knoten während eines Zyklus mit festem q nur einmal abfragt,

—eine Vorrichtung (11), die den Wert von q um eine Einheit erhöht, wenn die vorhergenannte Vorrichtung (15) alle vom dem Schaltkreis (14) bestimmten Knoten n abgefragt hat und daß überdies zumindest ein Knoten n existiert, so daß der erste Knoten eines Weges, welcher ein Minimum von Knoten aufweist, um vom m-ten zum n-ten Knoten zu gelangen, nicht noch einmal stimmt wird,

—einen Schaltkreis (12) zur Aufstellung der m-ten Zeile der Matrix $X_{q+1}$,

—einen Schaltkreis (13) zur Aufstellung der m-ten Zeile der Matrix $R_{q+1}$,

—einen Schaltkreis (8), der für jeden Knoten n eines Nextwerkes, für den mehrere Wege minimaler Knotenanzahl, um vom m-ten zum n-ten Knoten zu gelangen, existieren und für den die ersten Knoten dieser Wege verschieden sind, eine Auswahl eines dieser ersten Knoten durchführt, und

—einen Schaltkreis (9), der den gewählten ersten Knoten speichert und der die Weiterleitungs-Tabelle ausgehend vom m-ten Knoten aufstellt.

15. Schaltkreis nach Anspruch 14, dadurch
gekennzeichnet, daß die Vorrichtung (11) den Wert
von q mit dem von p vergleicht und mit dem
Schaltkreis (8) verbunden ist.

## Claims

1. A method of determining the last intermediate
node of a route having a minimum of nodes, for
going from the m-th node to the n-th node, in a
network comprising p nodes interconnected by
means of a plurality of sections (p being a positive
integer), more particularly designed for routing
both data between networked computers and
telephonic communications between interconnected automatic commutators, characterised
by comprising the following stages:
—firstly determining all the direct sections of the
network;
—then establishing and storing the square mat-
rix $R_1 = \|a_{ij}\|^p_p$ such that $a_{ij}=0$ if there is no direct
section from the i-th to the j-th node and $a_{ij}=1$ if a
direct section exists from the i-th to the j-th node,
—determining the existence of at least one path
in two sections from the m-th to the n-th mode,
where the direct section does not exist, by comparing the elements of the same rank of the m-th line
and of the n-th column of said matrix $R_1$, the
existence and the rank of any non-zero elements
common to the m-th line and to the n-th column
indicating the presence and the sequential position of an intermediate node of at least one two-
section route,
—in the absence of any such common non-zero
element, by iteration for any q varying from 2 to
$p-2$ until a route of $(q-1)$ sections has been
determined to connect the m-th node to the n-th
node,
. the square matrix

$$X_q = R_{q-1} \cdot R_1 = \|x_{ij}\|^p_p$$

equal to the product of matrices $R_{q-1}$ and $R_1$ is
computed, and then
. the square matrix $R_q = \|b_{ij}\|^p_p$ is established
such that $b_{ij}=1$ if $x_{ij}$ or $a_{ij}$ is other than zero and
$b_{ij}=o$ if $x_{ij}$ and $a_{ij}$ are both zero, and
. the elements of the same rank of the m-th line
of matrix Rq and of the n-th column of matrix $R_1$ are
compared, the existence and the rank of any
common non-zero elements indicating the presence and the sequential position of at least one
possible last intermediate node of a route with
$q+1$ sections.

2. The method according to claim 1, characterised by only computing the elements of square
matrix $X_q$ that correspond to the zero elements of
matrix $R_{q-1}$.

3. The method according to claim 1 or 2,
characterised in that, if the sections are not
oriented, only the elements of square matrix $X_q$ for
i less than j or for j less than i are computed.

4. The method according to claim 2 or 3,
characterised in that only the m-th lines of matrices $X_q$ and $R_q$ for q greater than 2 are computed.

5. A method of establishing a route having a
minimum of nodes, for going from the m-th to the
n-th node, in a network comprising p nodes
interconnected by means of a plurality of sections
(p being a whole integer), more particularly
designed for routing both data between networked computers and telephonic communications between interconnected automatic commutators, utilising the method of any one of claims
1 to 4, characterised by comprising the following
stages:
—determining the last intermediate node of a
route having a minimum of nodes for going from
the m-th node to the n-th node by the method
described in any one of claims 1 to 4, of which the
address is stored,
—then determining, by the method described in
any one of claims 1 to 4, the last intermediate node
of a route having a minimum of nodes for going
from the m-th node to the last intermediate node
determined previously, effecting an iteration until
the route between the m-th node and the last
intermediate node now comprises only a single
section.

6. The method according to claim 5, characterised by only computing the elements of the
square matrix $X_q$ that correspond to the zero
elements of the matrix $R_{q-1}$.

7. The method according to claim 6, characterised in that, if the sections are not oriented, only
the elements of the square matrix $X_q$ for i less than j
or for j less than i are computed.

8. The method according to claim 6 or 7,
characterised by only computing the m-th line of
matrices $X_q$ and $R_q$ for q greater than or equal to 2.

9. A method of establishing a routing table
localised in the m-th node, characterised in that the
method according to any one of claims 5 to 8 is
repeated not more than $p-2$ times for each of the
possible routes that can be established from the
m-th node.

10. The method according to claim 9, characterised in that it is updated each time a network
modification appears.

11. A method of establishing a general routing
table across the network, characterised by repeating the method according to claim 9 for all the
nodes of the network.

12. A circuit for implementing the method
according to claim 1, characterised by comprising
the following in combination:
—a detector (1) of direct sections,
—a circuit (2) for establishing the matrix $R_1$,
—a memory (3) where the matrix $R_1$ and the m-th
line of the matrix $R_q$ are stored,
—a device (41, 42) for reading from said memory
(3), said device being connected to a circuit (5)
allowing the elements of the same rank of the m-th
line of the matrix $R_q$ and those of the n-th column of
the matrix $R_1$ to be compared and the rank of such
non-zero elements to be determined,
—a circuit (6) which stores the address corresponding to the rank of a non-zero element determined previously,

—a device (11) which increments by a unit of q value if there is no common non-zero element of the same rank between said line and said column,

—a circuit (12) for establishing the m-th line of the matrix $X_{q+1}$,

—a circuit (13) for establishing the m-th line of the matrix $R_{q+1}$.

13. The circuit according to claim 12, characterised in that said device (11) compares the value of q with that of p.

14. A circuit for implementing the method according to claim 9, characterised by comprising the following in combination:

—a detector (1) of direct sections,

—a circuit (2) for establishing the matrix $R_1$,

—a memory (3) where the matrix $R_1$ and the m-th line of the matrix $R_q$ are stored,

—a device (41, 42) for reading from said memory (3), said device being connected to a circuit (5) allowing the elements of the same rank of the m-th line of the matrix $R_q$ and those of the n-th column of the matrix $R_1$ to be compared and the rank of such non-zero elements to be determined,

—a circuit (6) which stores the address corresponding to the rank of a non-zero element determined previously,

—a circuit (7) which computes and stores the address of the first node of each route determined with the minimum number of nodes for going from the m-th node to another node of the network,

—a circuit (14) which determines the nodes n of the network such that the first node of a route having a minimum of nodes for going from the m-th to the n-th node has not yet been determined,

—a device (15) which selects, at q fixed, one node n from those determined by the preceding circuit such that it considers them all once only during a cycle at q fixed,

—a device (11) which increments by a unit of value q, when said preceding device (15) has considered all the nodes n determined by said preceding circuit (14) and there still exists at least one node n such that the first node of a route having a minimum of nodes for going from the m-th to the n-th node has not yet been determined.

—a circuit (12) for establishing the m-th line of the matrix $X_{q+1}$,

—a circuit (13) for establishing the m-th line of the matrix $R_{q+1}$,

—a circuit (8) which, for any node n of the network such that there exist several routes with a minimum number of nodes for going from the m-th to the n-th node and such that the first nodes of these routes are different, effects the choice of one of these first nodes,

—a circuit (9) which memorises the first node chosen and which composes the routing table from the m-th node.

15. The circuit according to claim 14, characterised in that said device (11) compares the value of q with that of p and is connected to said circuit (8).

FIG-1

FIG-2

FIG-3

FIG-4